# EUROPÄISCHE PATENTSCHRIFT

(11) **EP 2 671 826 B1**
(45) Veröffentlichungstag und Bekanntmachung des Hinweises auf die Patenterteilung: **20.08.2014**
(21) Anmeldenummer: 12171152.7
(22) Anmeldetag: 07.06.2012
(51) Int. Cl.: B65G 65/36

(54) **Anordnung zum Lagern von rieselfähigem Schüttgut, insbesondere Streusalz**
Assembly for storing free-flowing bulk material, in particular road salt
Agencement destiné au stockage de produits en vrac pouvant s'écouler, en particulier sel d'épandage

(43) Veröffentlichungstag der Anmeldung: 11.12.2013
(73) Patentinhaber: BL Silobau AG, 9200 Gossau (CH)
(72) Erfinder: Frischknecht, Jakob, 9107 Urnäsch (CH)
(74) Vertreter: Hepp Wenger Ryffel AG

(56) Entgegenhaltungen:
- EP-A1- 0 170 080
- FR-A1- 2 535 374
- GB-A- 2 069 469

## Beschreibung

Die Erfindung betrifft eine Anordnung zum Lagern von rieselfähigem Schüttgut, insbesondere Streusalz gemäss dem Oberbegriff von Anspruch 1. Derartige Lagerhallen werden beispielsweise für die Zwischenlagerung von rieselfähigem Schüttgut wie z.B. Zement, Holzschnitzel oder Streusalz verwendet. Die kegelförmige Schüttguthalde wird dabei von einer zentralen Achse aus aufgetürmt und auf der gleichen Achse am Boden der Lagerfläche wiederum ausgetragen. Für die Aufschichtung und für den Austrag des Schüttguts können dabei unterschiedliche Fördermittel zum Einsatz kommen.

Die im Zentrum der Schüttguthalde angeordnete Hohlsäule erfüllt auf optimale Weise eine Doppelfunktion, indem sie dem Transport des Schüttguts und gleichzeitig der Abstützung des Dachs dient.

Durch die AT 302 899 und die AT 310 086 ist eine Lagerhalle für loses, rieselfähiges Schüttgut bekannt geworden, bei der innerhalb einer hohlen Säule ein Schöpfbecherwerk angeordnet ist. Die Lagerhalle selbst besteht aus einer verformbaren Dachhaut aus flexibler Kunststofffolie, die durch Überdruck im Innern der Halle in Form einer Kugelkalotte gehalten wird. Zusätzlich ist diese Dachhaut aber auch am oberen Ende der hohlen Säule abgestützt. In einem Fall erfolgt das Füllen und Entleeren der Lagerhalle über ein Förderband, das ausserhalb der Dachhaut bis zum oberen Ende der hohlen Säule geführt ist. Im anderen Fall erfolgt lediglich der Austrag des Schüttguts über das Schöpfbecherwerk in der hohlen Säule und über eine Abwurfrutsche ausserhalb der flexiblen Dachhaut.

Das Dokument FR-A-2 535 374 offenbart eine Anordnung zum Lagern von rieselfähigem Schüttgut gemäss dem Oberbegriff des Anspruchs 1.

Ein Nachteil der bekannten Anordnungen besteht darin, dass mechanische Fördervorrichtungen in der Hohlsäule störanfällig und mit einem grossen Aufwand verbunden sind. Ausserdem ist es unzweckmässig und beispielsweise im Falle von Streusalz unmöglich, den Austrag des Streuguts ausserhalb des Dachs durchzuführen. Schliesslich sollten gerade im Falle von Streusalz kostengünstige Lagerhallen bereitgestellt werden, welche im Winterdienst zuverlässig arbeiten und einen raschen Umschlag ermöglichen.

Diese Aufgabe wird erfindungsgemäss mit einer Anordnung gelöst, welche die Merkmale im Anspruch 1 aufweist. Das Schüttgut wird dabei mittels einer Zufuhrleitung vom unteren, der Lagerfläche zugewandten Ende der Hohlsäule bis zum oberen, dem Dach zugewandten Ende der Hohlsäule durch die Hohlsäule pneumatisch gefördert und am oberen Ende ausgetragen. Durch die pneumatische Förderung kann die Hohlsäule praktisch vollständig von beweglichen mechanischen Teilen freigehalten werden, was die Störanfälligkeit erheblich reduziert und die Kosten senkt. Das Austragen am oberen Ende der Hohlsäule ermöglicht ausserdem eine optimale Schichtung der Schüttguthalde.

Zu diesem Zweck kann am oberen Ende der Hohlsäule ausserdem ein um ihre Mittelachse drehbarer Verteiler zum Verteilen des Schüttguts um die Hohlsäule angeordnet sein. So kann je nach Bedarf eine Verteilung über 360° erzielt werden. Beim Verteiler kann es sich um einen motorisch angetriebenen Rohrstutzen handeln, der mittels einer Steuervorrichtung ansteuerbar ist. Alternativ kann die Verteilung aber auch über eine Prallplatte oder über einen Prallkegel erfolgen, sodass das pneumatisch geförderte Schüttgut umgelenkt und nach untern abgeführt wird. Je nach Bedarf kann die Abfuhr des Schüttguts über einen gesamten Umfang von 360° oder jeweils nur über einen bestimmten Sektor erfolgen.

Weitere Vorteile können erzielt werden, wenn das Schüttgut mittels einer Abfuhrleitung pneumatisch austragbar ist, welche sich von einer Austragöffnung in der Lagerfläche im Bereich des unteren Endes der Hohlsäule vorzugsweise unterhalb der Lagerfläche und vorzugsweise bis zu einem Bereich ausserhalb des Daches erstreckt. Der Abtransport erfolgt damit weitgehend ohne mechanische Fördermittel. Ausserdem kann der Abtransport des Schüttguts innerhalb der Halle geschützt erfolgen, sodass Witterungseinflüsse keine Rolle spielen.

Die Zufuhrleitung und die Abfuhrleitung kann dabei wenigstens über eine bestimmte Strecke in einem gemeinsamen Schacht unterhalb der Lagerfläche geführt sein. Da die Förderung in beiden Richtungen pneumatisch erfolgt, sind auch Krümmungen bzw. Steigungen der Leitungen zulässig.

Eine weitere wesentliche Vereinfachung kann dadurch erzielt werden, dass die Druckversorgung der Zufuhrleitung und der Abfuhrleitung über einen gemeinsamen Kompressor erfolgt. Da in der Regel nur eine der beiden Leitungen mit Druck beaufschlagt werden muss, steht auf diese Weise immer genügend Leistung am Kompressor zur Verfügung. In bestimmten Fällen wäre es selbstverständlich denkbar, die Druckversorgung der Zufuhrleitung und der Abfuhrleitung redundant auszugestalten.

Eine optimale Entnahme des Schüttguts von der Schüttguthalde kann dadurch erfolgen, dass im Bereich der Austragöffnung ein Trichter angeordnet ist, der das Schüttgut vorzugsweise über eine Zellradschleuse der Abfuhrleitung zuführt. Auf diese Weise wird der Schüttgutkegel an seiner Basis und im Zentrum abgetragen, wobei der Druck des Schüttguts die Einführung in den Trichter begünstigt. An der Zellradschleuse wird das Schüttgut in den Förderluftstrom eindosiert.

Das untere Ende der Hohlsäule ist dabei wenigstens teilweise vom Trichter umgeben und an diesem abgestützt. Auf diese Weise kann die Tragsäule ihre statische Funktion ausüben, wobei die Kräfte über den Trichter auf den Boden übertragen werden. Trotzdem ist eine weitgehend rotationssymmetrische Abfuhr des Streuguts über den Trichter möglich.

Vorzugsweise in einem Bereich ausserhalb des Dachs kann eine Belade- und Entladestation angeordnet sein, an welcher Lastfahrzeuge beladen und entladen werden können. In bestimmten Fällen wäre es allerdings denkbar, die Belade- und Entladestation auch innerhalb der Dachkonstruktion anzuordnen. Dies wäre insbesondere dann der Fall, wenn für das Dach nicht eine besonders vorteilhafte Kuppelform, sondern eine alternative Konstruktion gewählt wird.

An der Belade- und Entladestation kann ein Einfülltrichter angeordnet sein, der das Schüttgut vorzugsweise über eine Zellradschleuse der Zufuhrleitung zuführt. So kann beispielsweise von einer Saline angeliefertes Streusalz auf einem Lastwagen direkt in den Einfülltrichter entladen und pneumatisch der Schüttguthalde zugeführt werden. Ebenso kann an der Belade- und Entladestation ein Ausgabesilo für die Zwischenlagerung einer Teilmenge des Schüttguts angeordnet sein, wobei der Ausgabesilo über die Abfuhrleitung befüllbar ist und eine Dosieröffnung aufweist, aus der unter dem Silo parkierte Lastfahrzeuge beladen werden können. Derartige, unterfahrbare Streugutsilos sind an sich bereit bekannt und gebräuchlich. Der Ausgabesilo kann jeweils durch Entnahme von der Schüttguthalde soweit gefüllt werden, dass jederzeit ein taktweises Beladen von Lastfahrzeugen möglich ist.

Weitere Vorteile können erzielt werden, wenn ein Austragbandförderer um die Hohlsäule drehbar angeordnet ist, dessen der Hohlsäule zugewandtes Ende um ein am entgegengesetzten Ende angeordnetes Schwenklager heb- und senkbar ist und mit dessen Hilfe das Schüttgut einer Austragöffnung in der Lagerfläche im Bereich des unteren Endes der Hohlsäule zuführbar ist. Dieser bewegliche Austragbandförderer stellt sicher, dass auch bezogen auf das Zentrum weit entfernte Teilmengen der Schüttguthalde abgetragen werden können. Das Rieselverhalten eines Schüttgutkegels erlaub nämlich unter Schwerkrafteinwirkung keine vollständige Entleerung im Zentrum, wenn die Lagerfläche nicht insgesamt als Trichter ausgebildet ist, wie dies beispielsweise bei der AT 310 086 der Fall ist. Die Anordnung eines derartigen Austragbandförderers wäre grundsätzlich auch bei konventionellen Lagerhallen bzw. Anordnungen möglich, bei denen die Förderung des Schüttguts nicht pneumatisch erfolgt und/oder bei denen die Hohlsäule nicht gleichzeitig auch noch das Dach abstützt. Unter dem Begriff Austragbandförderer ist jede Bandfördereinrichtung zu verstehen, die einen Transport von rieselfähigem Schüttgut erlaubt. Dabei kann es sich um ein Schöpfbecherwerk oder auch nur um ein einfaches Förderband handeln.

Der Austragbandförderer kann an einem Fahrgestell angeordnet sein, welches vorzugsweise über Schienenräder auf der Lagerfläche und über ein Drehgelenk am oberen Ende der Hohlsäule abgestützt ist. Die Hohlsäule übernimmt damit ersichtlicherweise eine doppelte Stützfunktion, indem sie einerseits in vertikaler Richtung einen Teil der Dachlast trägt und andererseits in Querrichtung das Fahrgestell abstützt. Ein Schienenfahrwerk am Fahrgestell ermöglicht eine gute Spursicherheit selbst dann, wenn ein Teil der Spur mit Schüttgut kontaminiert ist.

Schliesslich kann die Aufschichtung und die Abtragung der Schüttguthalde weiter dadurch optimiert werden, dass die Konfiguration der Schüttguthalde mit einem die Hohlsäule umkreisenden Detektionsmittel erfassbar ist und dass die Zufuhr und/oder die Abfuhr des Schüttguts bezogen auf einzelne Sektoren der Schüttguthalde in Abhängigkeit von der erfassten Konfiguration steuerbar ist. Beim Detektionsmittel kann es sich beispielsweise um geeignete Abstandssensoren handeln, mit deren Hilfe nach einer Umkreisung der Hohlsäule um 360° ein Querschnittsprofil dargestellt werden kann. Die Steuerung des oben erwähnten drehbaren Verteilers oder auch des Austragbandförderers erfolgt in Abhängigkeit dieses Profils, so dass stets eine rotationssymmetrisch gleichmässige Konfiguration des Schüttgutkegels aufrecht erhalten werden kann.

Ebenso kann es zweckmässig sein, wenn die Konfiguration der Schüttguthalde mit einem die Hohlsäule umkreisenden Detektionsmittel erfassbar ist und wenn aus den ermittelten Werten in einem Rechner das Gewicht und/oder das Volumen der Schüttguthalde ermittelbar ist. Mit einer derartigen Anordnung kann beispielsweise von einer weit entfernten Zentrale aus jederzeit der vorhandene Vorrat an Streusalz abgefragt werden, was beispielsweise im Wintereinsatz die Planung erheblich erleichtert.

Die Detektionsmittel können dabei am Fahrgestell für den Austragförderer angeordnet sein. Denkbar wäre aber selbstverständlich auch eine separate Führung oder gar eine feste Anordnung der Detektionsmittel. Auch diese Art der Detektion der Schüttguthalde und der damit ermöglichten Ansteuerung der Zufuhr oder Abfuhr des Schüttguts wäre an konventionellen Anlagen denkbar.

Weitere Vorteile und Einzelnmerkmale der Erfindung ergeben sich aus der nachfolgenden Beschreibung eines Ausführungsbeispiels und aus den Zeichnungen. Es zeigen:
- Figur 1: einen Querschnitt durch eine erfindungsgemässe Anordnung mit kuppelartigem Dach und ausserhalb angeordneter Belade- und Entladestation,
- Figur 2: eine Ansicht der Belade- und Entladestation gemäss Figur 1,
- Figur 3: eine perspektivische Darstellung eines drehbaren Verteilers am oberen Ende der Hohlsäule,
- Figur 4: ein Querschnitt durch eine alternative Ausführungsform eines Verteilers,
- Figur 5: eine perspektivische Darstellung der Trichterkonstruktion am unteren Ende der Hohlsäule,
- Figur 6: eine perspektivische Darstellung der Stützkonstruktion am unteren Ende der Hohlsäule,
- Figur 7: eine perspektivische Darstellung des Einfülltrichters und der Kompressoranlage an der Belade- und Entladestation,
- Figur 8: eine perspektivische Darstellung des Fahrgestells für den Austragbandförderer,
- Figur 9: eine perspektivische Darstellung des Austragsbandförderers, und
- Figur 10: ein Querschnitt durch eine weitere alternative Ausführungsform eines Verteilers.

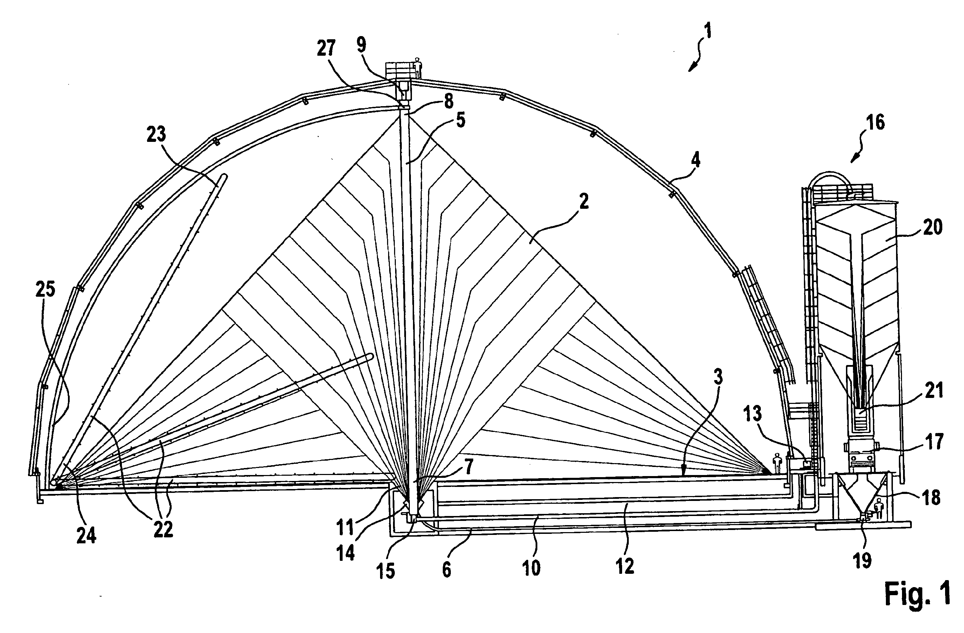

Wie in Figur 1 dargestellt, besteht die insgesamt mit 1 bezeichnete Anlage im Wesentlichen aus einer Lagerhalle, die durch ein kuppelartiges Dach 4 gebildet wird, welches sich über eine kreisförmige Lagerfläche 3 wölbt. Beim Dach kann es sich beispielsweise um eine Holzkonstruktion oder um eine Stahlkonstruktion handeln. Selbstverständlich wären auch andere Dachformen, wie eine kegelförmige Konstruktion möglich. Ausserhalb der Dachkonstruktion ist eine Belade- und Entladestation 16 angeordnet, welche beispielsweise von Lastkraftwagen 17 befahren werden kann.

Im Zentrum der Lagerhalle ist eine vertikale Hohlsäule 5 angeordnet, die sich vom unteren Ende 7 bis zum oberen Ende 8 erstreckt und die am oberen Ende wenigstens einen Teil der Dachlast aufnimmt. Um diese Hohlsäule wird eine Schüttguthalde 2 in der Form eines Kegels aufgeschichtet. Die in Figur 1 eingezeichneten Linien im Schüttgutkegel symbolisieren einerseits den Bereich des Kegels, in welchem die Abfuhr gegen eine Austragöffnung 11 in Folge Kernfluss selbstständig möglich ist. Andererseits symbolisieren die Linien einen vom Kernfluss getrennten Ringbereich, der nur mit Hilfe eines Austragbandförderers 22 der Austragöffnung 11 zugeführt werden kann. In Figur 1 ist dieser Austragbandförderer in drei Positionen dargestellt, nämlich in einer ganz angehobenen, in einer ganz abgesenkten Horizontalen und in einer Zwischenposition. Der Austragbandförderer ist dabei mit seinem von der Hohlsäule 5 abgewandten Ende 24 schwenkbar an einem Fahrgestell 25 montiert. Das der Hohlsäule 5 zugewandten Ende 23 liegt unmittelbar im Bereich über der Austragöffnung 11. Das Fahrgestell 25 ist um 360° um die Hohlsäule 5 fahrbar.

Die Einspeisung des Schüttguts erfolgt am Einfülltrichter 18 an der Belade- und Entladestation 16. Über eine Zellradschleuse 19 am unteren Ende dieses Einfülltrichters wird beispielsweise das Streusalz pneumatisch in eine Zufuhrleitung 6 eindosiert, die von einem Kompressor 13 gespeist wird. Diese Zufuhrleitung führt unterhalb der Lagerfläche 3 in einen Schacht 12 bis zum unteren Ende 7 der Hohlsäule 5 und von dort in einer 90° Krümmung in der Hohlsäule bis zum oberen Ende 8. Von dort erfolgt die Beschichtung des Schüttgutkegels über einen Verteiler 9.

Wie durch die Linien symbolisch dargestellt, bewirkt der Kernfluss im Schüttgutkegel eine Konzentration des Schüttguts auf die Austragöffnung 11 und auf einen unmittelbar darunter angeordneten Trichter 14. Zum Abtragen von Schüttgut wird dieses über eine Zellradschleuse 15 pneumatisch in eine Abfuhrleitung 10 eindosiert, welche parallel zur Zufuhrleitung 6 ebenfalls im Schacht 12 verläuft und welche vom gleichen Kompressor 13 beaufschlagt wird. Ausserhalb des Dachs 4 führt die Abfuhrleitung 10 als Steigrohr bis zum oberen Ende eines Ausgabesilos 20, der auf diese Weise gefüllt werden kann. Der Ausgabesilo ist am unteren Ende mit einer Dosieröffnung 21 versehen, aus welcher ein Lastfahrzeug 17 beladen werden kann.

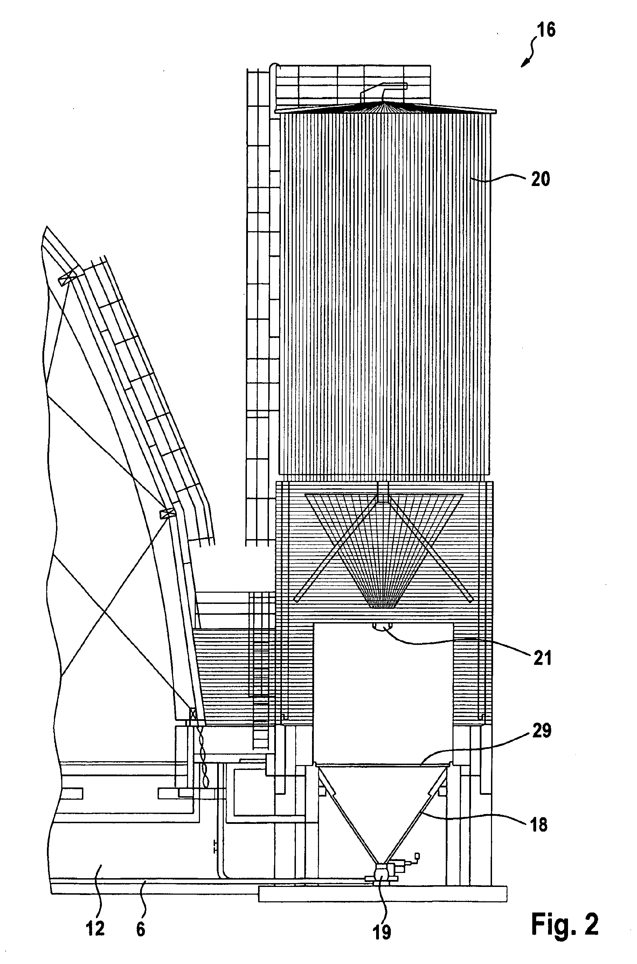

In Figur 2 ist die Belade- und Entladestation 16 in etwas vergrösserter Darstellung nochmals gezeigt. Auch beim Ausgabesilo 20 kann es sich beispielsweise um eine Holzkonstruktion handeln, was sich insbesondere für Streusalz besonders bewährt hat. Über dem Einfülltrichter 18 ist ein Gitterrost 29 angeordnet, der von Lastfahrzeugen befahren werden kann und durch welchen der Einfülltrichter 18 beschickbar ist. Um die vorhandene Vorratsmenge im Silo 20 zu überwachen, können an den Stützen des Silos Gewichtssenoren integriert sein, sodass ein permanentes Einwägen des Nettogewichts im Silo möglich wird.

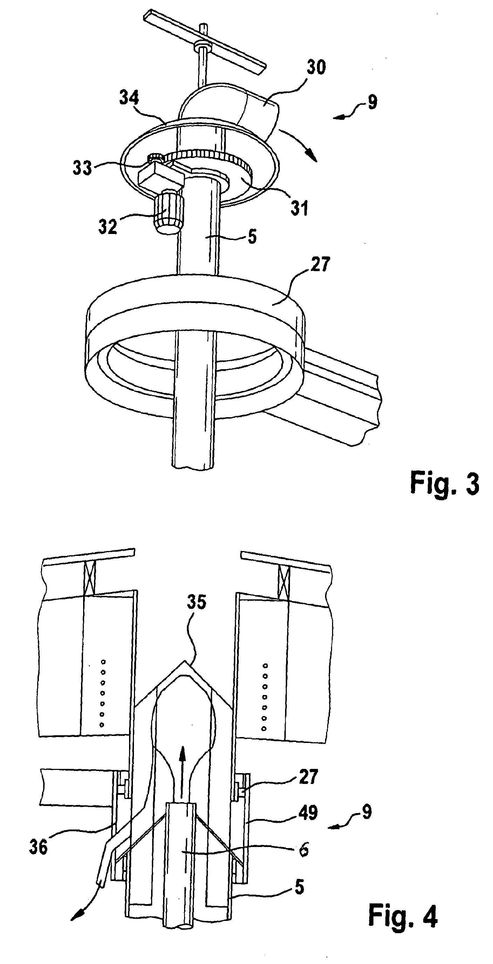

In Figur 3 ist ein Verteiler 9 am oberen Ende der Hohlsäule 5 dargestellt und zwar in der Form eines um 360° drehbaren Verteilstutzen 30. Der Verteilstutzen weist einen Zahnkranz 31 auf, der über ein ortsfestes Antriebsritzel 33 mit Hilfe eines Motors 32 drehantreibbar ist. Eine Blende 34 verhindert, dass der Antriebsmechanismus mit Schüttgut kontaminiert werden kann. Ebenfalls am oberen Ende ist das Drehgelenk 27 für die Abstützung des Fahrgestells sichtbar, dessen Funktion nachstehend noch beschrieben wird.

Gemäss einer alternativen Ausführungsform in Figur 4 erfolgt die Verteilung des Schüttguts am oberen Ende der Hohlsäule 5 mit Hilfe eines Prallkegels 35. Dieser ist über der Austrittsöffnung der Zufuhrleitung 6 angeordnet, sodass herausgeschleudertes Schüttgut am Prallkegel 35 nach unten umgelenkt und über eine Öffnung 36 abgeführt wird. Diese Öffnung ist an einem zylindrischen Rohrstück 49 angeordnet, das Bestandteil des Drehgelenks 27 ist und sich daher zusammen mit dem Fahrgestell dreht. Ersichtlicherweise erfolgt so die Ableitung von Schüttgut jeweils immer in den Sektor, in dem sich das Fahrgestell befindet.

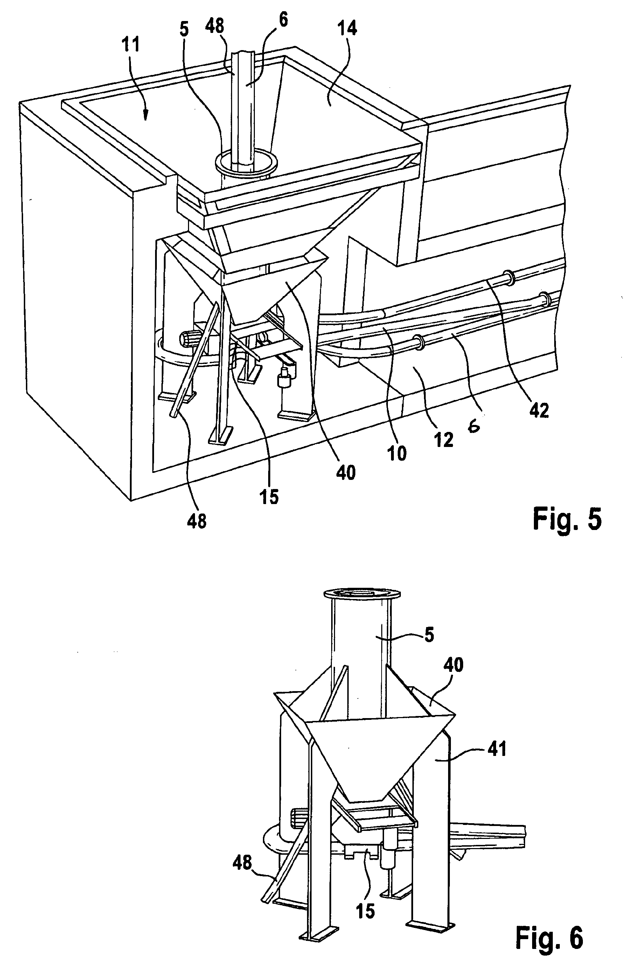

Die Figuren 5 und 6 zeigen weitere Details im Bereich des Trichters 14 am unteren Ende der Hohlsäule 5. Demnach ist ein oberer Trichterabschnitt direkt in die quadratische Austragöffnung 11 am Boden der Lagerfläche eingelegt. Diese Austragöffnung ist Bestandteil einer Betonkonstruktion und damit integraler Bestandteil des Fundaments. Unmittelbar an den oberen Trichterabschnitt 14 aber getrennt von diesem schliesst sich ein eigentlicher Kerntrichter 40 an, bei dem es sich um eine massive Stahlkonstruktion handeln. Dieser Kerntrichter ist von Stützfüssen 41 durchsetzt, welche fest mit dem unteren Ende der Hohlsäule 5 verbunden sind und damit die dort auftretenden Stützkräfte in den Boden ableiten.

Aus den Figuren 5 und 6 sind auch noch weitere Details der Leitungsführung sichtbar. Demnach ist die Zufuhrleitung 6 durch den Kerntrichter 40 hindurch in die Hohlsäule 5 eingeführt. Die Abfuhrleitung 10 schliesst sich unmittelbar an die Zellradschleuse 15 an, die auf an sich bekannte Art und Weise von einem Elektromotor angetrieben wird. Die Förderluft wird von einer Zufuhrleitung 42 an die Zellradschleuse herangeführt und zwar ebenfalls durch den Schacht 12. Schliesslich ist in den Figuren 5 und 6 auch noch eine Elektroleitung 48 sichtbar, die zusammen mit der Zufuhrleitung 6 ebenfalls in der Hohlsäule hoch geführt wird. Über diese Elektroleitung wird beispielsweise der in Figur 3 dargestellte Motor 32 angetrieben. Die zentrale Stromzufuhr vom Zentrum aus kann aber auch noch für andere Verbraucher wie z.B. Beleuchtung usw. zweckmässig sein. Selbst der Austragbandförderer 22 könnte mit Hilfe eines entsprechenden Stromabnehmers über diese zentrale Leitung versorgt werden.

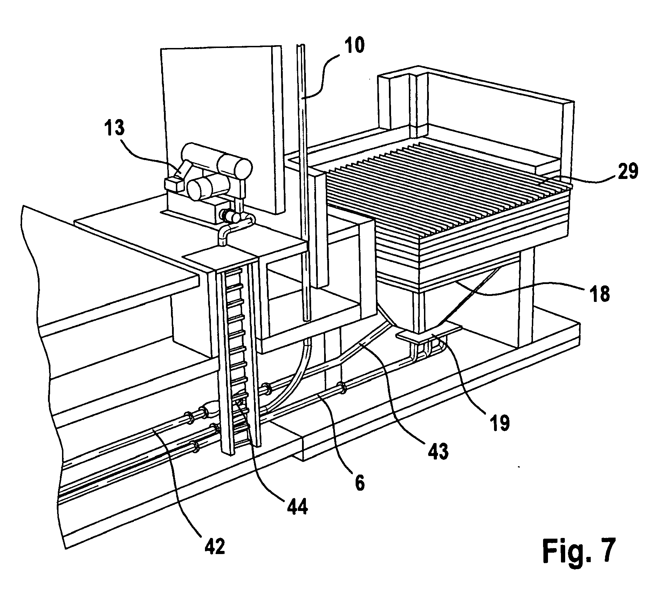

Figur 7 zeigt nochmals den unter dem Gitterrost 29 angeordneten Einfülltrichter 18 mit seiner Zellradschleuse 19 am unteren Ende. Die Zellradschleuse ist mit der Zufuhrleitung 6 verbunden und wird über eine Zufuhrleitung 43 mit Druckluft versorgt. Beide Zufuhrleitungen 42 und 43 sind von einem gemeinsamen Kompressor 13 beaufschlagbar, wobei an einer Druckluftweiche 44 entweder die eine oder die andere Zufuhrleitung beaufschlagt werden kann, je nach dem, ob Schüttgut beladen oder entladen wird.

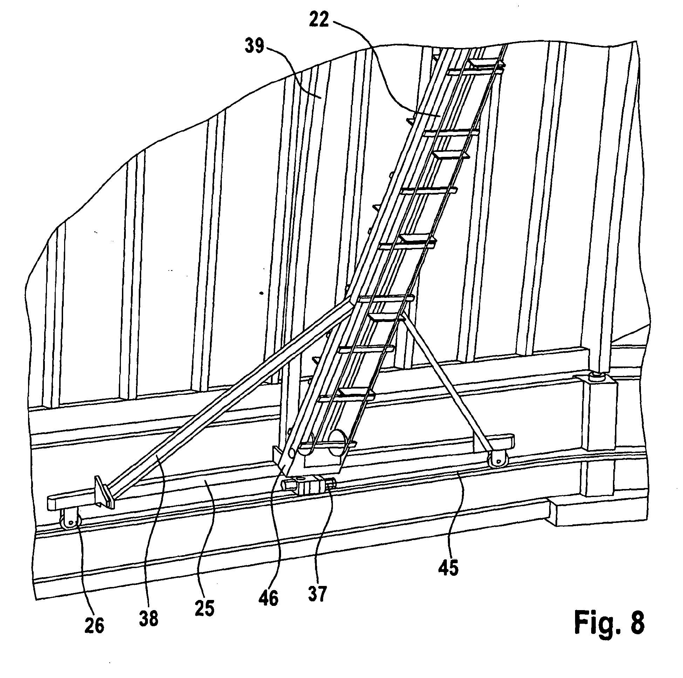

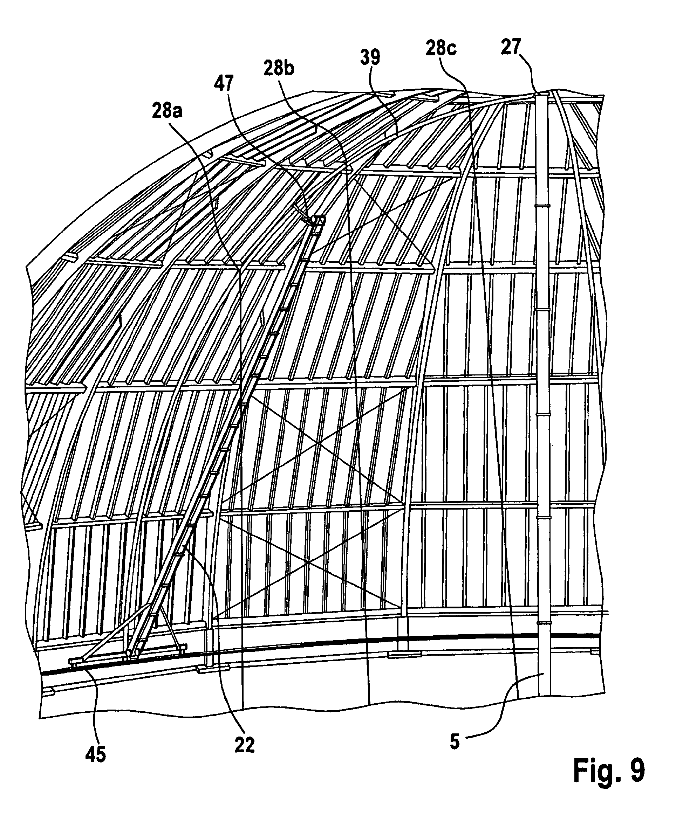

Aus den Figuren 8 und 9 sind noch weitere Details zum Austragbandförderer 22 ersichtlich. Das insgesamt mit 25 bezeichnete Fahrgestell verfügt über ein Schwenklager 46, an welchem der Austragbandförderer heb- und senkbar ist (Figur 1). Zur besseren Querstabilität sind Querstreben 38 angeordnet. Das Fahrgestell verfügt über Schienenräder 26, die auf einer Schiene 45 laufen. Der Antrieb erfolgt über einen Elektromotor 37. Da die Last des Austragbandförderers 22 nicht nur über die Schienenräder 26 abgestützt werden kann, führt eine Hauptstütze 39 mit einer ähnlichen Krümmung wie das kuppelartige Dach bis zum oberen Ende der Hohlsäule 5 und ist dort am Drehgelenk 27 abgestützt. An dieser Hauptstütze ist eine Seilwinde 47 angeordnet, mit deren Hilfe der Lagewinkel des Austragbandförderers einstellbar ist. An der Hauptstütze 39 sind ausserdem Abstandssensoren 28, 28b und 28c angeordnet, die ein Abscannen des Schüttgutkegels im Verlaufe einer völligen Umdrehung des Fahrgestells ermöglichen.

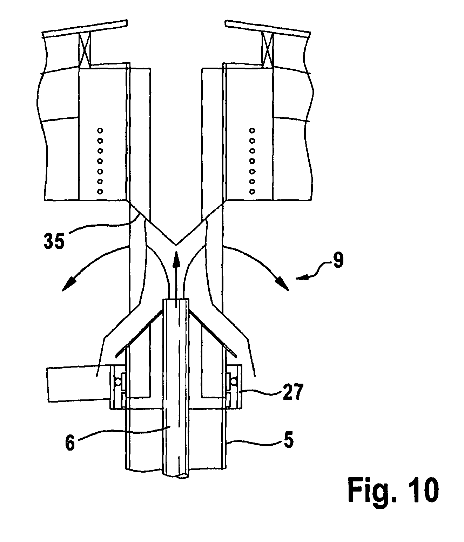

Bei der in Figur 10 dargestellten Variante des Verteilers 9 findet die Verteilung des Schüttguts nicht über eine aktive Drehbewegung am Verteiler statt. Im Gegensatz zum Ausführungsbeispiel gemäss Figur 4 ist die kegelförmige Prallplatte 35 mit ihrer Kegelspitze nach unten gegen die obere Öffnung der Zufuhrleitung 6 gerichtet. Das Schüttgut wird auf diese Weise pilzförmig und gleichmässig über den gesamten Umfang von 360° verteilt.

## Patentansprüche

1. Anordnung (1) zum Lagern von rieselfähigem Schüttgut, insbesondere Streusalz, auf einer vorzugsweise kegelförmigen Schüttguthalde (2), mit einer vorzugsweise kreisförmigen Lagerfläche (3), über welche ein vorzugsweise domartiges Dach (4) gespannt ist, und mit einer Hohlsäule (5), welche sich von der Lagerfläche bis unter das Dach erstreckt und letzteres abstützt, sowie mit Mitteln für die Zufuhr des Schüttguts durch die Hohlsäule, **dadurch gekennzeichnet, dass** das Schüttgut mittels einer Zufuhrleitung (6) am unteren, der Lagerfläche (3) zugewandten Ende (7) der Hohlsäule bis zum oberen, dem Dach (4) zugewandten Ende (8) der Hohlsäule durch die Hohlsäule pneumatisch förderbar und am oberen Ende austragbar ist.

2. Anordnung nach Anspruch 1, **dadurch gekennzeichnet, dass** am oberen Ende (8) der Hohlsäule (5) ein um ihre Mittelachse drehbarer Verteiler (9) zum verteilen des Schüttguts um die Hohlsäule angeordnet ist.

3. Anordnung nach Anspruch 1 oder 2, **dadurch gekennzeichnet, dass** das Schüttgut mittels einer Abfuhrleitung (10) pneumatisch austragbar ist, welche sich von einer Austragöffnung (11) in der Lagerfläche (3) im Bereich des unteren Endes (7) der Hohlsäule vorzugsweise unterhalb der Lagerfläche vorzugsweise bis zu einem Bereich ausserhalb des Daches erstreckt.

4. Anordnung nach Anspruch 3, **dadurch gekennzeichnet, dass** die Zufuhrleitung (6) und die Abfuhrleitung (10) in einem gemeinsamen Schacht (12) unterhalb der Lagerfläche (3) geführt sind.

5. Anordnung nach Anspruch 3 oder 4, **dadurch gekennzeichnet, dass** die Druckversorgung der Zufuhrleitung (6) und der Abfuhrleitung (10) über einen gemeinsamen Kompressor (13) erfolgt.

6. Anordnung nach einem der Ansprüche 3 bis 5, **dadurch gekennzeichnet, dass** im Bereich der Austragöffnung (11) ein Trichter (14) angeordnet ist, der das Schüttgut vorzugsweise über eine Zellradschleuse (15) der Abfuhrleitung (10) zuführt.

7. Anordnung nach Anspruch 6, **dadurch gekennzeichnet, dass** das untere Ende der Hohlsäule wenigstens teilweise vom Trichter (14) umgeben und an diesem abgestützt ist.

8. Anordnung nach einem der Ansprüche 1 bis 7, **dadurch gekennzeichnet, dass** in einem Bereich ausserhalb des Dachs eine Belade- und Entladestation (16) angeordnet ist, an welcher Lastfahrzeuge (17) beladen und entladen werden können.

9. Anordnung nach Anspruch 8, **dadurch gekennzeichnet, dass** an der Belade- und Entladestation (16) ein Einfülltrichter (18) angeordnet ist, der das Schüttgut vorzugsweise über eine Zellradschleuse (15) der Zufuhrleitung (6) zuführt.

10. Anordnung nach Anspruch 3 und Anspruch 8, **dadurch gekennzeichnet, dass** an der Belade- und Entladestation (16) ein Ausgabesilo (20) für die Zwischenlagerung einer Teilmenge des Schüttguts angeordnet ist, wobei der Ausgabesilo über die Abfuhrleitung (10) befüllbar ist und eine Dosieröffnung (21) aufweist, aus der unter dem Silo parkierte Lastfahrzeuge beladen werden können.

11. Anordnung nach einem der Ansprüche 1 bis 10, **dadurch gekennzeichnet, dass** ein Austragbandförderer (22) um die Hohlsäule (5) drehbar angeordnet ist, dessen der Hohlsäule zugewandtes Ende (23) um ein am entgegengesetzten Ende (24) angeordnetes Schwenklager heb- und senkbar ist und mit dessen Hilfe das Schüttgut einer Austragöffnung (11) in der Lagefläche (3) im Bereich des unteren Endes (7) der Hohlsäule (5) zuführbar ist.

12. Anordnung nach Anspruch 11, **dadurch gekennzeichnet, dass** der Austragbandförderer (22) an einem Fahrgestell (25) angeordnet ist, welches vorzugsweise über Schienenräder auf der Lagerfläche (3) und über ein Drehgelenk (27) am oberen Ende (8) der Hohlsäule (5) abgestützt ist.

13. Anordnung nach einem der Ansprüche 1 bis 12, **dadurch gekennzeichnet, dass** die Konfiguration der Schüttguthalde (2) mit einem die Hohlsäule (5) umkreisenden Detektionsmittel (28a, 28b, 28c) erfassbar ist und dass die Zufuhr und/oder die Abfuhr des Schüttguts bezogen auf einzelne Sektoren der Schüttguthalde in Abhängigkeit von der erfassten Konfiguration steuerbar ist.

14. Anordnung nach einem der Ansprüche 1 bis 12, **dadurch gekennzeichnet, dass** die Konfiguration der Schüttguthalde (2) mit einem die Hohlsäule (5) umkreisenden Detektionsmittel (28a, 28b, 28c) erfassbar ist und dass aus den ermittelten Werten in einem Rechner das Gewicht und/oder das Volumen der Schüttguthalde ermittelbar ist.

15. Anordnung nach Anspruch 12 und einem der Ansprüche 13 oder 14, **dadurch gekennzeichnet, dass** das Detekionsmittel am Fahrgestell (25) angeordnet ist.

## Claims

1. Arrangement (1) for storing free-flowing bulk material, in particular road salt, in a preferably conical bulk material heap (2), having a preferably circular storage surface (3) over which a preferably dome-like roof (4) is streched, and having a hollow column (5) which extends from the storage surface to below the roof and supports the latter, and having means for feeding the bulk material through the hollow column, **characterized in that** the bulk material can be pneumatically conveyed through the hollow column by means of a feed line (6) at the lower end (7) of the hollow column facing the storage surface (3) to the upper end (8) of the hollow column facing the roof (4) and can be discharged at the upper end.

2. Arrangement according to Claim 1, **characterized in that** a distributor (9) which can be rotated about its centre axis and is intended for distributing the bulk material about the hollow column is arranged at the upper end (8) of the hollow column (5) .

3. Arrangement according to Claim 1 or 2, **characterized in that** the bulk material can be pneumatically discharged by means of a removal line (10) which extends from a discharge opening (11) in the storage surface (3) in the region of the lower end (7) of the hollow column preferably below the storage surface preferably to a region outside the roof.

4. Arrangement according to Claim 3, **characterized in that** the feed line (6) and the removal line (10) are routed in a common shaft (12) below the storage surface (3).

5. Arrangement according to Claim 3 or 4, **characterized in that** the feed line (6) and the removal line (10) are supplied with pressure via a common compressor (13).

6. Arrangement according to one of Claims 3 to 5, **characterized in that** a hopper (14) which preferably feeds the bulk material via a rotary feeder (15) to the removal line (10) is arranged in the region of the discharge opening (11).

7. Arrangement according to Claim 6, **characterized in that** the lower end of the hollow column is enclosed at least partially by the hopper (14) and is supported thereon.

8. Arrangement according to one of Claims 1 to 7, **characterized in that** a loading and unloading station (16), at which lorries (17) can be loaded and unloaded, is arranged in a region outside the roof.

9. Arrangement according to Claim 8, **characterized in that** a filling hopper (18) which preferably feeds the bulk material via a rotary feeder (19) to the feed line (6) is arranged at the loading and unloading station (16).

10. Arrangement according to Claim 3 and Claim 8, **characterized in that** a discharge silo (20) for the intermediate storage of a partial quantity of the bulk material is arranged at the loading and unloading station (16), wherein the discharge silo can be filled via the removal line (10) and has a dosage opening (21) from which lorries parked below the silo can be loaded.

11. Arrangement according to one of Claims 1 to 10, **characterized in that** a discharge belt conveyer (22) is arranged such that it can be rotated about the hollow column (5), of which the end (23) facing the hollow column can be raised and lowered about a pivot storage arranged at the opposite end (24) and with the aid of which the bulk material can be fed to a discharge opening (11) in the storage surface (3) in the region of the lower end (7) of the hollow column (5).

12. Arrangement according to Claim 11, **characterized in that** the discharge belt conveyer (22) is arranged on a chassis (25) which is preferably supported via rail wheels on the storage surface (3) and via a pivot joint (27) at the upper end (8) of the hollow column (5).

13. Arrangement according to one of Claims 1 to 12, **characterized in that** the configuration of the bulk material heap (2) can be detected with a detection means (28a, 28b, 28c) orbiting the hollow column (5) and **in that** the feeding and/or the removal of the bulk material can be controlled with respect to individual sectors of the bulk material heap as a function of the detected configuration.

14. Arrangement according to one of Claims 1 to 12, **characterized in that** the configuration of the bulk material heap (2) can be detected with a detection means (28a, 28b, 28c) orbiting the hollow column (5) and **in that** the weight and/or the volume of the bulk material heap can be determined in a computer from the determined values.

15. Arrangement according to Claim 12 and either of Claims 13 and 14, **characterized in that** the detection means is arranged on the chassis (25).

## Revendications

1. Arrangement (1) destiné au stockage de produit en vrac pouvant s'écouler, en particulier de sel d'épandage, sur un tas de produit en vrac (2) de préférence conique, comprenant une surface de stockage (3) de préférence circulaire au-dessus de laquelle est tendu un toit (4) de préférence en forme de dôme, et comprenant un pilier creux (5), lequelle s'étend à partir de la surface de stockage jusqu'en dessous du toit et supporte ce dernier, et comprenant des moyens pour l'amenée du produit en vrac à travers le pilier creux, **caractérisé en ce que** le produit en vrac peut être transporté de manière pneumatique à travers le pilier creux au moyen d'une conduite d'amenée (6) à l'extrémité (7) inférieure, tournée vers la surface de stockage (3), de le pilier creux jusqu'à l'extrémité (8) supérieure, tournée vers le toit (4), de le pilier creux et peut être déchargé à l'extrémité supérieure.

2. Arrangement selon la revendication 1, **caractérisé en ce qu'**un distributeur (9) est disposé à l'extrémité supérieure (8) de le pilier creux (5), pouvant tourner autour de son axe médian, pour distribuer le produit en vrac autour de le pilier creux.

3. Arrangement selon la revendication 1 ou 2, **caractérisé en ce que** le produit en vrac peut être déchargé de manière pneumatique au moyen d'une conduite d'évacuation (10), laquelle s'étend à partir d'une ouverture de décharge (11) dans la surface de stockage (3) dans la région de l'extrémité inférieure (7) de le pilier creux de préférence en dessous de la surface de stockage, de préférence jusqu'à une région à l'extérieur du toit.

4. Arrangement selon la revendication 3, **caractérisé en ce que** la conduite d'amenée (6) et la conduite d'évacuation (10) sont guidées dans un passage commun (12) en dessous de la surface de stockage (3) .

5. Arrangement selon la revendication 3 ou 4, **caractérisé en ce que** l'alimentation en pression de la conduite d'amenée (6) et de la conduite d'évacuation (10) s'effectue par le biais d'un compresseur commun (13).

6. Arrangement selon l'une quelconque des revendications 3 à 5, **caractérisé en ce qu'**un entonnoir (14) est disposé dans la région de l'ouverture de décharge (11), lequel entonnoir amène le produit en vrac jusqu'à la conduite d'évacuation (10) de préférence par le biais d'une écluse à roue cellulaire (15).

7. Arrangement selon la revendication 6, **caractérisé en ce que** l'extrémité inférieure de le pilier creux est entourée au moins partiellement par l'entonnoir (14) et est supportée sur celui-ci.

8. Arrangement selon l'une quelconque des revendications 1 à 7, **caractérisé en ce qu'**un poste de chargement et de déchargement (16) est disposé dans une région à l'extérieur du toit, au niveau duquel poste de chargement et de déchargement des poids lourds (17) peuvent être chargés et déchargés.

9. Arrangement selon la revendication 8, **caractérisé en ce qu'**un entonnoir de remplissage (18) est disposé au niveau du poste de chargement et de déchargement (16), lequel entonnoir de remplissage amène le produit en vrac jusqu'à la conduite d'amenée (6) de préférence par le biais d'une écluse à roue cellulaire (19).

10. Arrangement selon la revendication 3 et la revendication 8, **caractérisé en ce qu'**un, silo de sortie (20) pour le stockage temporaire d'une quantité partielle du produit en vrac est disposé au niveau du poste de chargement et de déchargement (16), le silo de sortie pouvant être rempli par le biais de la conduite d'évacuation (10) et comprenant une ouverture de dosage (21) à partir de laquelle des poids lourds garés en dessous du silo peuvent être chargés.

11. Arrangement selon l'une quelconque des revendications 1 à 10, **caractérisé en ce qu'**un transporteur à bande de déchargement (22) est disposé de manière à pouvoir tourner autour de le pilier creux (5), l'extrémité (23), tournée vers le pilier creux, duquel pouvant être soulevée et abaissée autour d'un palier de pivotement disposé à l'extrémité opposée (24), et à l'aide duquel le produit en vrac peut être amené jusqu'à une ouverture de décharge (11) dans la surface de stockage (3) dans la région de l'extrémité inférieure (7) de le pilier creux (5).

12. Arrangement selon la revendication 11, **caractérisé en ce que** le transporteur à bande de déchargement (22) est disposé sur un châssis (25), lequel est supporté de préférence par le biais de roues sur rail sur la surface de stockage (3) et par le biais d'une articulation rotative (27) à l'extrémité supérieure (8) de le pilier creux (5).

13. Arrangement selon l'une quelconque des revendications 1 à 12, **caractérisé en ce que** la configuration du tas de produit en vrac (2) peut être détectée à l'aide d'un moyen de détection (28a, 28b, 28c) tournant autour de le pilier creux (5), et **en ce que** l'amenée et/ou l'évacuation du produit en vrac peu(ven)t être commandée(s) par rapport à des secteurs individuels du tas de produit en vrac en fonction de la configuration détectée.

14. Arrangement selon l'une quelconque des revendications 1 à 12, **caractérisé en ce que** la configuration du tas de produit en vrac (2) peut être détectée à l'aide d'un moyen de détection (28a, 28b, 28c) tournant autour de le pilier creux (5), et **en ce que** le poids et/ou le volume du tas de produit en vrac peu(ven)t être déterminé(s) dans un calculateur à partir des valeurs déterminées.

15. Arrangement selon la revendication 12 et l'une quelconque des revendications 13 et 14, **caractérisé en ce que** le moyen de détection est disposé sur le châssis (25).
